(19) Europäisches Patentamt
European Patent Office
Office européen des brevets

(11) **EP 4 250 735 A1**

(12) **EUROPEAN PATENT APPLICATION**
published in accordance with Art. 153(4) EPC

(43) Date of publication:
**27.09.2023 Bulletin 2023/39**

(21) Application number: **21898596.8**

(22) Date of filing: **24.11.2021**

(51) International Patent Classification (IPC):
**H04N 19/593** (2014.01)     **H04N 19/176** (2014.01)
**H04N 19/119** (2014.01)     **H04N 19/61** (2014.01)

(52) Cooperative Patent Classification (CPC):
**H04N 19/119; H04N 19/176; H04N 19/593;
H04N 19/61**

(86) International application number:
**PCT/KR2021/017383**

(87) International publication number:
**WO 2022/114770 (02.06.2022 Gazette 2022/22)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.11.2020   KR 20200158994**

(71) Applicants:
• **HYUNDAI MOTOR COMPANY**
  **Seoul 06797 (KR)**
• **Kia Corporation**
  **Seocho-gu**
  **Seoul 06797 (KR)**
• **Kwangwoon University**
  **Industry-Academic Collaboration Foundation**
  **Seoul 01897 (KR)**

(72) Inventors:
• **PARK, Jun Taek**
  **Seoul 03755 (KR)**
• **CHOI, Han Sol**
  **Dongducheon-si Gyeonggi-do 11342 (KR)**
• **SIM, Dong Gyu**
  **Seoul 01901 (KR)**
• **PARK, Seung Wook**
  **Yongin-si Gyeonggi-do 16803 (KR)**

(74) Representative: **Isarpatent**
**Patent- und Rechtsanwälte Barth
Charles Hassa Peckmann & Partner mbB
Friedrichstrasse 31
80801 München (DE)**

(54) **METHOD AND DEVICE FOR INTRA PREDICTION USING BLOCK COPY BASED ON GEOMETRIC TRANSFORM**

(57)     The present disclosure is related to an intra prediction method and an apparatus using block copy based on geometric transform. The intra prediction method and apparatus derive a reference block vector at each vertex of a current block and perform a geometric transform on the reference block vectors to generate reference blocks of various shapes that are not constrained to rectangular shapes. The intra prediction method and apparatus calculate a sub-block-vector for each pixel or group of pixels of the current block using the reference block vectors.

FIG. 16

**Description**

[Technical Field]

The present disclosure relates to an intra prediction method and an apparatus using block copy based on geometric transform.

[Background]

The statements in this section merely provide background information related to the present disclosure and do not necessarily constitute prior art.

Since video data has a large amount of data compared to audio or still image data, the video data requires a lot of hardware resources, including memory, to store or transmit the video data without processing for compression.

Accordingly, an encoder is generally used to compress and store or transmit video data. A decoder receives the compressed video data, decompresses the received compressed video data, and plays the decompressed video data. Video compression techniques include H.264/AVC, High Efficiency Video Coding (HEVC), and Versatile Video Coding (VVC), which has improved coding efficiency by about 30% or more compared to HEVC.

However, since the image size, resolution, and frame rate gradually increase, the amount of data to be encoded also increases. Accordingly, a new compression technique providing higher coding efficiency and an improved image enhancement effect than existing compression techniques is required.

In image (video) encoding and decoding, an intra prediction method that predicts a current block by copying a reference block within the same frame may be performed. The intra prediction method that uses a block vector for referencing a reference block is called Intra Block Copy (IBC). Existing IBC technology has a problem of supporting only horizontal and vertical translational motions in a block copy process. Therefore, it is necessary to consider improving the existing IBC technology in terms of video quality improvement.

[Disclosure]

[Technical Problem]

The present disclosure in some embodiments seeks to provide an intra prediction method and an apparatus that derive a reference block vector (BV) at each vertex of a current block and perform a geometric transform on reference block vectors to generate reference blocks of various shapes that are not constrained to rectangular shapes. The intra prediction method and apparatus calculate a sub-block-vector for each pixel or each group of pixels of the current block using reference block vectors.

[Technical Solution]

At least one aspect of the present disclosure provides an intra block copy method performed by a video decoding apparatus. The method comprises decoding information of a map or a list storing block vectors used in pre-decoded blocks from a bitstream. The method also comprises calculating reference block vectors at vertices of a current block based on the map or the list. The method also comprises calculating sub-block-vectors for each pixel or each subblock of the current block using the reference block vectors. The method also comprises generating prediction samples for each pixel or each subblock within the same frame including the current block using the sub-block-vectors.

Another aspect of the present disclosure provides a video decoding apparatus comprises an entropy decoder configured to decode information of a map or a list storing block vectors used in pre-decoded blocks from a bitstream. The apparatus also comprises an intra predictor configured to calculate reference block vectors at vertices of a current block based on the map or the list and calculate sub-block-vectors for each pixel or each subblock of the current block using the reference block vectors. The intra predictor generates prediction samples for each pixel or each subblock within the same frame including the current block using the sub-block-vectors.

Yet another aspect of the present disclosure provides an intra block copy method performed by a video encoding apparatus. The method comprises obtaining information of a map or a list storing block vectors used in pre-decoded blocks. The method also comprises calculating reference block vectors at vertices of a current block based on the map or the list. The method also comprises calculating sub-block-vectors for each pixel or each subblock of the current block using the reference block vectors. The method also comprises generating prediction samples for each pixel or each subblock within the same frame including the current block using the sub-block-vectors.

**[Advantageous Effects]**

As described above, the present embodiment provides an intra prediction method and an apparatus that derive a reference block vector at each vertex of a current block and perform a geometric transform on reference block vectors to generate reference blocks of various shapes that are not constrained to rectangular shapes. The intra prediction method and apparatus calculate a sub-block-vector for each pixel or each group of pixels of the current block using the reference block vectors, thereby improving prediction performance of intra prediction based on block copy.

**[Brief Description of the Drawings]**

FIG. 1 is a block diagram of a video encoding apparatus that may implement the techniques of the present disclosure.
FIG. 2 illustrates a method for partitioning a block using a quadtree plus binarytree ternarytree (QTBTTT) structure.
FIGS. 3A and 3B illustrate a plurality of intra prediction modes including wide-angle intra prediction modes.
FIG. 4 illustrates neighboring blocks of a current block.
FIG. 5 is a block diagram of a video decoding apparatus that may implement the techniques of the present disclosure.
FIGS. 6A and 6B illustrate affine motion prediction according to one embodiment of the present disclosure.
FIG. 7 illustrates affine motion prediction per subblock basis according to one embodiment of the present disclosure.
FIG. 8 illustrates a method for deriving merge candidates for affine motion prediction from translational motion vectors of neighboring blocks.
FIG. 9 illustrates a reference block vector at each vertex of a current block according to one embodiment of the present disclosure.
FIG. 10 illustrates a search region according to one embodiment of the present disclosure.
FIG. 11 illustrates the shapes of reference blocks according to one embodiment of the present disclosure.
FIG. 12 illustrates a case in which a single reference vector is used according to one embodiment of the present disclosure.
FIG. 13 illustrates a case in which two or more reference vectors are used according to one embodiment of the present disclosure.
FIG. 14 illustrates a case in which a current block and a reference block has a scaling relationship according to one embodiment of the present disclosure.
FIG. 15 is a flow diagram illustrating an intra block copy method based on a geometric transform performed by a video encoding apparatus according to one embodiment of the present disclosure.
FIG. 16 is a flow diagram illustrating an intra block copy method based on a geometric transform performed by a video decoding apparatus according to one embodiment of the present disclosure.

**[Detailed Description]**

Hereinafter, some embodiments of the present disclosure are described in detail with reference to the accompanying illustrative drawings. In the following description, like reference numerals designate like elements, although the elements are shown in different drawings. Further, in the following description of some embodiments, a detailed description of related known components and functions when considered to obscure the subject of the present disclosure has been omitted for the purpose of clarity and for brevity.

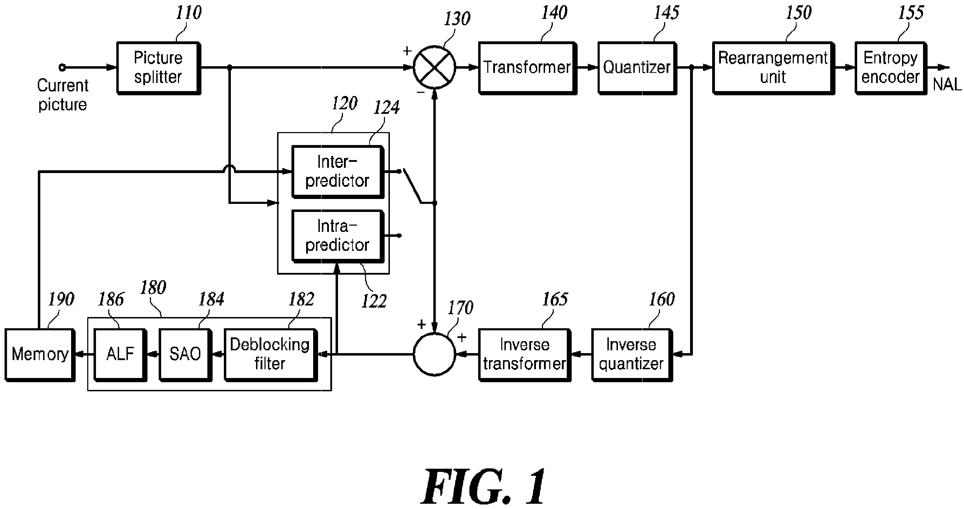

FIG. 1 is a block diagram for a video encoding apparatus which may implement technologies of the present disclosure. Hereinafter, referring to illustration of FIG. 1, the video encoding apparatus and sub-components of the apparatus are described.

The encoding apparatus may include a picture splitter 110, a predictor 120, a subtractor 130, a transformer 140, a quantizer 145, a rearrangement unit 150, an entropy encoder 155, an inverse quantizer 160, an inverse transformer 165, an adder 170, a loop filter unit 180, and a memory 190.

Each component of the encoding apparatus may be implemented as hardware or software or implemented as a combination of hardware and software. Further, a function of each component may be implemented as the software, and a microprocessor may also be implemented to execute the function of the software corresponding to each component.

One video is constituted by one or more sequences including a plurality of pictures. Each picture is split into a plurality of areas, and encoding is performed for each area. For example, one picture is split into one or more tiles or/and slices. Here, one or more tiles may be defined as a tile group. Each tile or/and slice is split into one or more coding tree units (CTUs). In addition, each CTU is split into one or more coding units (CUs) by a tree structure. Information applied to each CU is encoded as a syntax of the CU and information commonly applied to the CUs included in one CTU is encoded as the syntax of the CTU. Further, information commonly applied to all blocks in one slice is encoded as the syntax of a slice header, and information applied to all blocks constituting one or more pictures is encoded to a picture parameter set (PPS) or a picture header. Furthermore, information, which the plurality of pictures commonly refers to, is encoded to a sequence parameter set (SPS). In addition, information, which one or more SPS commonly refer to, is encoded to a video parameter set (VPS). Further, information commonly applied to one tile or tile group may also be encoded as the syntax of a tile or tile group header. The syntaxes included in the SPS, the PPS, the slice header, the tile, or the tile group header may be referred to as a high level syntax.

The picture splitter 110 determines a size of CTU. Information on the size of the CTU (CTU size) is encoded as the syntax of the SPS or the PPS and delivered to a video decoding apparatus.

The picture splitter 110 splits each picture constituting the video into a plurality of CTUs having a predetermined size and then recursively splits the CTU by using a tree structure. A leaf node in the tree structure becomes the CU, which is a basic unit of encoding.

The tree structure may be a quadtree (QT) in which a higher node (or a parent node) is split into four lower nodes (or child nodes) having the same size. The tree structure may also be a binarytree (BT) in which the higher node is split into two lower nodes. The tree structure may also be a ternary tree (TT) in which the higher node is split into three lower nodes at a ratio of 1:2:1. The tree structure may also be a structure in which two or more structures among the QT structure, the BT structure, and the TT structure are mixed. For example, a quadtree plus binarytree (QTBT) structure may be used or a quadtree plus binarytree ternarytree (QTBTTT) structure may be used. Here, a BTTT is added to the tree structures to be referred to as a multiple-type tree (MTT).

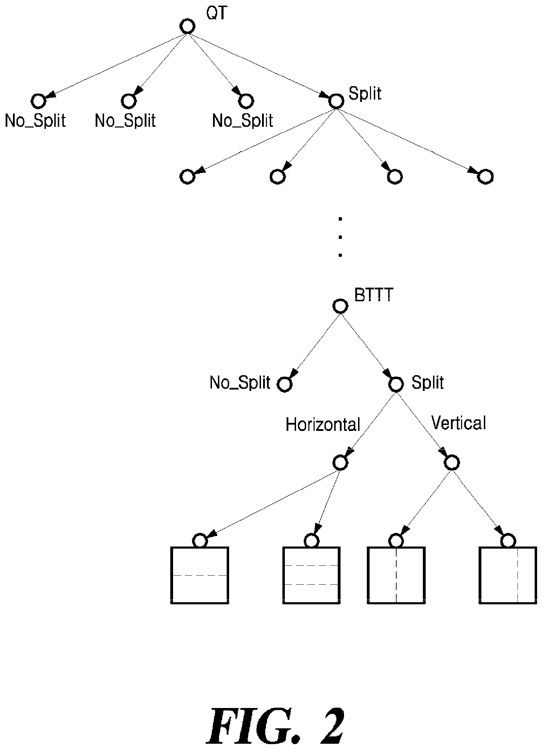

FIG. 2 is a diagram for describing a method for splitting a block by using a QTBTTT structure.

As illustrated in FIG. 2, the CTU may first split into the QT structure. Quadtree splitting may be recursive until the size of a splitting block reaches a minimum block size (MinQTSize) of the leaf node permitted in the QT. A first flag (QT_split_flag) indicating whether each node of the QT structure is split into four nodes of a lower layer is encoded by the entropy encoder 155 and signaled to the video decoding apparatus. When the leaf node of the QT is not larger than a maximum block size (MaxBTSize) of a root node permitted in the BT, the leaf node may be further split into at least one of the BT structure or the TT structure. A plurality of split directions may be present in the BT structure and/or the TT structure. For example, there may be two directions, i.e., in a direction in which the block of the corresponding node is split horizontally and a direction in which the block of the corresponding node is split vertically. As illustrated in FIG. 2, when the MTT splitting starts, a second flag (mtt_split_flag) indicating whether the nodes are split, and a flag additionally indicating the split direction (vertical or horizontal), and/or a flag indicating a split type (binary or ternary) if the nodes are split are encoded by the entropy encoder 155 and signaled to the video decoding apparatus.

Alternatively, prior to encoding the first flag (QT_split_flag) indicating whether each node is split into four nodes of the lower layer, a CU split flag (split_cu_flag) indicating whether the node is split may also be encoded. When a value of the CU split flag (split_cu_flag) indicates that each node is not split, the block of the corresponding node becomes the leaf node in the split tree structure and becomes the CU, which is the basic unit of encoding. When the value of the CU split flag (split_cu_flag) indicates that each node is split, the video encoding apparatus starts encoding the first flag first by the above-described scheme.

When the QTBT is used as another example of the tree structure, there may be two types, i.e., a type (i.e., symmetric horizontal splitting) in which the block of the corresponding node is horizontally split into two blocks having the same size and a type (i.e., symmetric vertical splitting) in which the block of the corresponding node is vertically split into two blocks having the same size. A split flag (split_flag) indicating whether each node of the BT structure is split into the block of the lower layer and split type information indicating a splitting type are encoded by the entropy encoder 155 and delivered to the video decoding apparatus. Meanwhile, a type in which the block of the corresponding node is split into two blocks of a form of being asymmetrical to each other may be additionally present. The asymmetrical form may include a form in which the block of the corresponding node split into two rectangular blocks having a size ratio of 1:3 or may also include a form in which the block of the corresponding node is split in a diagonal direction.

The CU may have various sizes according to QTBT or QTBTTT splitting from the CTU. Hereinafter, a block corresponding to a CU (i.e., the leaf node of the QTBTTT) to be encoded or decoded is referred to as a "current block". As the QTBTTT splitting is adopted, a shape of the current block may also be a rectangular shape in addition to a square shape.

The predictor 120 predicts the current block to generate a prediction block. The predictor 120 includes an intra predictor 122 and an inter predictor 124.

In general, each of the current blocks in the picture may be predictively coded. In general, the prediction of the current block may be performed by using an intra prediction technology (using data from the picture including the current block) or an inter prediction technology (using data from a picture coded before the picture including the current block). The inter prediction includes both unidirectional prediction and bidirectional prediction.

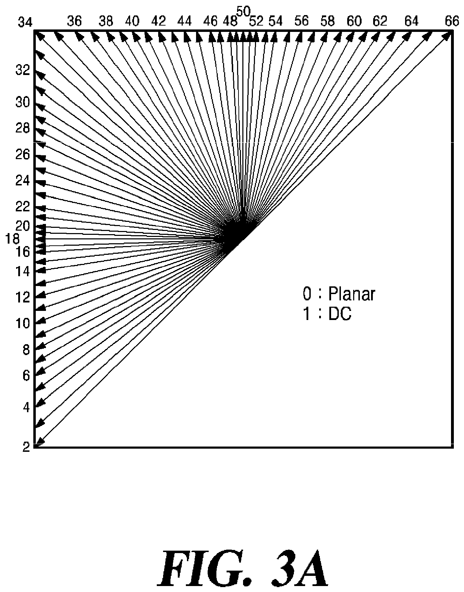

The intra predictor 122 predicts pixels in the current block by using pixels (reference pixels) positioned on a neighboring of the current block in the current picture including the current block. There is a plurality of intra prediction modes according to the prediction direction. For example, as illustrated in FIG. 3A, the plurality of intra prediction modes may include 2 non-directional modes including a planar mode and a DC mode and may include 65 directional modes. A neighboring pixel and an arithmetic equation to be used are defined differently according to each prediction mode.

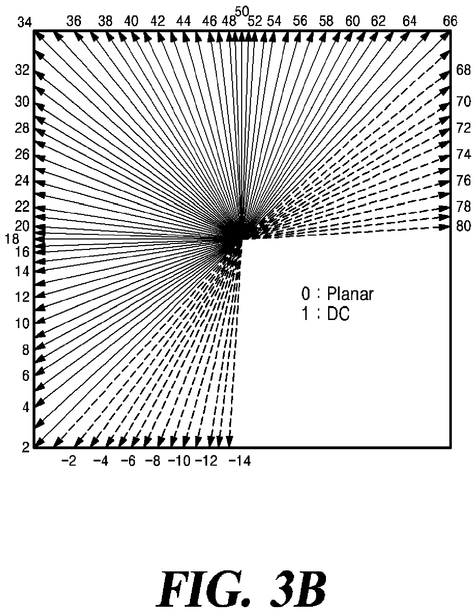

For efficient directional prediction for the current block having the rectangular shape, directional modes (#67 to #80, intra prediction modes #-1 to #-14) illustrated as dotted arrows in FIG. 3B may be additionally used. The directional modes may be referred to as "wide angle intra-prediction modes". In FIG. 3B, the arrows indicate corresponding reference samples used for the prediction and do not represent the prediction directions. The prediction direction is opposite to a direction indicated by the arrow. When the current block has the rectangular shape, the wide angle intra-prediction modes are modes in which the prediction is performed in an opposite direction to a specific directional mode without additional bit transmission. In this case, among the wide angle intra-prediction modes, some wide angle intra-prediction modes usable for the current block may be determined by a ratio of a width and a height of the current block having the rectangular shape. For example, when the current block has a rectangular shape in which the height is smaller than the width, wide angle intra-prediction modes (intra prediction modes #67 to #80) having an angle smaller than 45 degrees are usable. When the current block has a rectangular shape in which the width is larger than the height, the wide angle intra-prediction modes having an angle larger than -135 degrees are usable.

The intra predictor 122 may determine an intra prediction to be used for encoding the current block. In some examples, the intra predictor 122 may encode the current block by using multiple intra prediction modes and also select an appropriate intra prediction mode to be used from tested modes. For example, the intra predictor 122 may calculate rate-distortion values by using a rate-distortion analysis for multiple tested intra prediction modes and also select an intra prediction mode having best rate-distortion features among the tested modes.

The intra predictor 122 selects one intra prediction mode among a plurality of intra prediction modes and predicts the current block by using a neighboring pixel (reference pixel) and an arithmetic equation determined according to the selected intra prediction mode. Information on the selected intra prediction mode is encoded by the entropy encoder 155 and delivered to the video decoding apparatus.

The inter predictor 124 generates the prediction block for the current block by using a motion compensation process. The inter predictor 124 searches a block most similar to the current block in a reference picture encoded and decoded earlier than the current picture and generates the prediction block for the current block by using the searched block. In addition, a motion vector (MV) is generated, which corresponds to a displacement between the current bock in the current picture and the prediction block in the reference picture. In general, motion estimation is performed for a luma component, and a motion vector calculated based on the luma component is used for both the luma component and a chroma component. Motion information including information the reference picture and information on the motion vector used for predicting the current block is encoded by the entropy encoder 155 and delivered to the video decoding apparatus.

The inter predictor 124 may also perform interpolation for the reference picture or a reference block in order to increase accuracy of the prediction. In other words, sub-samples between two contiguous integer samples are interpolated by applying filter coefficients to a plurality of contiguous integer samples including two integer samples. When a process of searching a block most similar to the current block is performed for the interpolated reference picture, not integer sample unit precision but decimal unit precision may be expressed for the motion vector. Precision or resolution of the motion vector may be set differently for each target area to be encoded, e.g., a unit such as the slice, the tile, the CTU, the CU, etc. When such an adaptive motion vector resolution (AMVR) is applied, information on the motion vector resolution to be applied to each target area should be signaled for each target area. For example, when the target area is the CU, the information on the motion vector resolution applied for each CU is signaled. The information on the motion vector resolution may be information representing precision of a motion vector difference to be described below.

Meanwhile, the inter predictor 124 may perform inter prediction by using bi-prediction. In the case of the bi-prediction, two reference pictures and two motion vectors representing a block position most similar to the current block in each reference picture are used. The inter predictor 124 selects a first reference picture and a second reference picture from reference picture list 0 (RefPicList0) and reference picture list 1 (RefPicList1), respectively. The inter predictor 124 also searches blocks most similar to the current blocks in the respective reference pictures to generate a first reference block and a second reference block. In addition, the prediction block for the current block is generated by averaging or weighted-averaging the first reference block and the second reference block. In addition, motion information including information on two reference pictures used for predicting the current block and information on two motion vectors is delivered to the entropy encoder 155. Here, reference picture list 0 may be constituted by pictures before the current picture in a display order among pre-restored pictures, and reference picture list 1 may be constituted by pictures after the current picture in the display order among the pre-restored pictures. However, although not particularly limited thereto, the pre-restored pictures after the current picture in the display order may be additionally included in reference picture list 0. Inversely, the pre-restored pictures before the current picture may also be additionally included in reference picture list 1.

In order to minimize a bit quantity consumed for encoding the motion information, various methods may be used.

For example, when the reference picture and the motion vector of the current block are the same as the reference picture and the motion vector of the neighboring block, information capable of identifying the neighboring block is encoded to deliver the motion information of the current block to the video decoding apparatus. Such a method is referred to as a merge mode.

In the merge mode, the inter predictor 124 selects a predetermined number of merge candidate blocks (hereinafter, referred to as a "merge candidate") from the neighboring blocks of the current block.

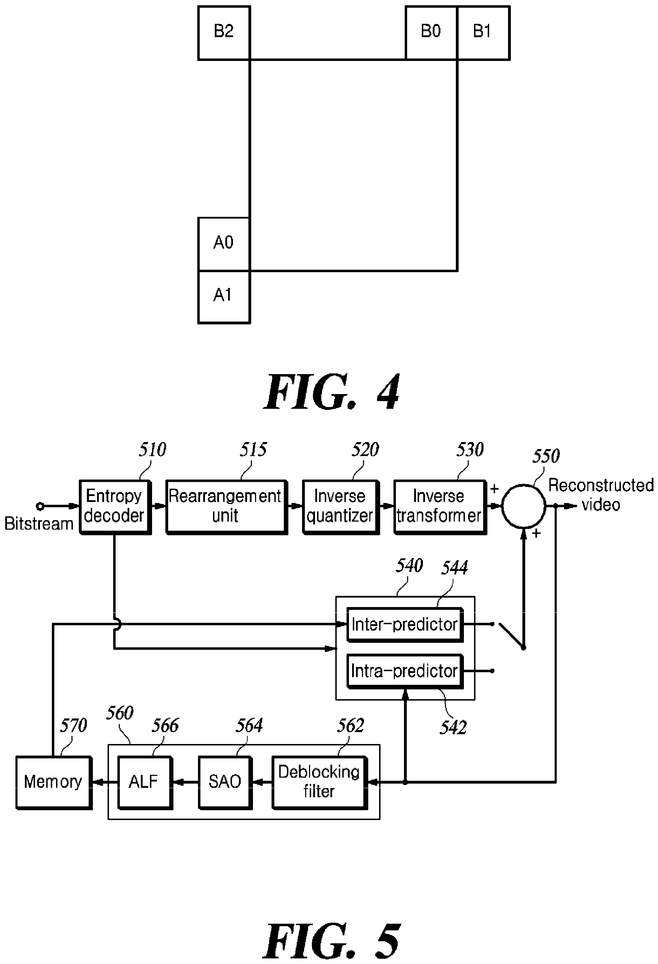

As a neighboring block for deriving the merge candidate, all or some of a left block A0, a bottom left block A1, a top block B0, a top right block B1, and a top left block B2 adjacent to the current block in the current picture may be used as illustrated in FIG. 4. Further, a block positioned within the reference picture (may be the same as or different from the reference picture used for predicting the current block) other than the current picture at which the current block is positioned may also be used as the merge candidate. For example, a co-located block with the current block within the reference picture or blocks adjacent to the co-located block may be additionally used as the merge candidate. If the number of merge candidates selected by the method described above is smaller than a preset number, a zero vector is added to the merge candidate.

The inter predictor 124 configures a merge list including a predetermined number of merge candidates by using the neighboring blocks. A merge candidate to be used as the motion information of the current block is selected from the merge candidates included in the merge list, and merge index information for identifying the selected candidate is generated. The generated merge index information is encoded by the entropy encoder 155 and delivered to the video decoding apparatus.

The merge skip mode is a special case of the merge mode. After quantization, when all transform coefficients for entropy encoding are close to zero, only the neighboring block selection information is transmitted without transmitting a residual signal. By using the merge skip mode, it is possible to achieve a relatively high encoding efficiency for images with slight motion, still images, screen content images, and the like.

Hereafter, the merge mode and the merge skip mode are collectively called the merge/skip mode.

Another method for encoding the motion information is an advanced motion vector prediction (AMVP) mode.

In the AMVP mode, the inter predictor 124 derives motion vector predictor candidates for the motion vector of the current block by using the neighboring blocks of the current block. As a neighboring block used for deriving the motion vector predictor candidates, all or some of a left block A0, a bottom left block A1, a top block B0, a top right block B 1, and a top left block B2 adjacent to the current block in the current picture illustrated in FIG. 4 may be used. Further, a block positioned within the reference picture (may be the same as or different from the reference picture used for predicting the current block) other than the current picture at which the current block is positioned may also be used as the neighboring block used for deriving the motion vector predictor candidates. For example, a co-located block with the current block within the reference picture or blocks adjacent to the co-located block may be used. If the number of motion vector candidates selected by the method described above is smaller than a preset number, a zero vector is added to the motion vector candidate.

The inter predictor 124 derives the motion vector predictor candidates by using the motion vector of the neighboring blocks and determines motion vector predictor for the motion vector of the current block by using the motion vector predictor candidates. In addition, a motion vector difference is calculated by subtracting motion vector predictor from the motion vector of the current block.

The motion vector predictor may be acquired by applying a pre-defined function (e.g., center value and average value computation, etc.) to the motion vector predictor candidates. In this case, the video decoding apparatus also knows the pre-defined function. Further, since the neighboring block used for deriving the motion vector predictor candidate is a block in which encoding and decoding are already completed, the video decoding apparatus may also already know the motion vector of the neighboring block. Therefore, the video encoding apparatus does not need to encode information for identifying the motion vector predictor candidate. Accordingly, in this case, information on the motion vector difference and information on the reference picture used for predicting the current block are encoded.

Meanwhile, the motion vector predictor may also be determined by a scheme of selecting any one of the motion vector predictor candidates. In this case, information for identifying the selected motion vector predictor candidate is additional encoded jointly with the information on the motion vector difference and the information on the reference picture used for predicting the current block.

The subtractor 130 generates a residual block by subtracting the prediction block generated by the intra predictor 122 or the inter predictor 124 from the current block.

The transformer 140 transforms a residual signal in a residual block having pixel values of a spatial domain into a transform coefficient of a frequency domain. The transformer 140 may transform residual signals in the residual block by using a total size of the residual block as a transform unit or also split the residual block into a plurality of subblocks and perform the transform by using the subblock as the transform unit. Alternatively, the residual block is divided into two subblocks, which are a transform area and a non-transform area to transform the residual signals by using only the transform area subblock as the transform unit. Here, the transform area subblock may be one of two rectangular blocks having a size ratio of 1:1 based on a horizontal axis (or vertical axis). In this case, a flag (cu_sbt_flag) indicates that only the subblock is transformed, and directional (vertical/horizontal) information (cu_sbt_horizontal_flag) and/or positional information (cu_sbt_pos_flag) are encoded by the entropy encoder 155 and signaled to the video decoding apparatus. Further, a size of the transform area subblock may have a size ratio of 1:3 based on the horizontal axis (or vertical axis). In this case, a flag (cu_sbt_quad_flag) dividing the corresponding splitting is additionally encoded by the entropy encoder 155 and signaled to the video decoding apparatus.

Meanwhile, the transformer 140 may perform the transform for the residual block individually in a horizontal direction and a vertical direction. For the transform, various types of transform functions or transform matrices may be used. For example, a pair of transform functions for horizontal transform and vertical transform may be defined as a multiple transform set (MTS). The transformer 140 may select one transform function pair having highest transform efficiency in the MTS and transform the residual block in each of the horizontal and vertical directions. Information (mts_idx) on the transform function pair in the MTS is encoded by the entropy encoder 155 and signaled to the video decoding apparatus.

The quantizer 145 quantizes the transform coefficients output from the transformer 140 using a quantization parameter and outputs the quantized transform coefficients to the entropy encoder 155. The quantizer 145 may also immediately quantize the related residual block without the transform for any block or frame. The quantizer 145 may also apply different quantization coefficients (scaling values) according to positions of the transform coefficients in the transform block. A quantization matrix applied to transform coefficients quantized arranged in 2 dimensional may be encoded and signaled to the video decoding apparatus.

The rearrangement unit 150 may perform realignment of coefficient values for quantized residual values.

The rearrangement unit 150 may change a 2D coefficient array to a 1D coefficient sequence by using coefficient scanning. For example, the rearrangement unit 150 may output the 1D coefficient sequence by scanning a DC coefficient to a high-frequency domain coefficient by using a zig-zag scan or a diagonal scan. According to the size of the transform unit and the intra prediction mode, vertical scan of scanning a 2D coefficient array in a column direction and horizontal scan of scanning a 2D block type coefficient in a row direction may also be used instead of the zig-zag scan. In other words, according to the size of the transform unit and the intra prediction mode, a scan method to be used may be determined among the zig-zag scan, the diagonal scan, the vertical scan, and the horizontal scan.

The entropy encoder 155 generates a bitstream by encoding a sequence of 1D quantized transform coefficients output from the rearrangement unit 150 by using various encoding schemes including a Context-based Adaptive Binary Arithmetic Code (CABAC), an Exponential Golomb, or the like.

Further, the entropy encoder 155 encodes information such as a CTU size, a CTU split flag, a QT split flag, an MTT split type, an MTT split direction, etc., related to the block splitting to allow the video decoding apparatus to split the block equally to the video encoding apparatus. Further, the entropy encoder 155 encodes information on a prediction type indicating whether the current block is encoded by intra prediction or inter prediction. The entropy encoder 155 encodes intra prediction information (i.e., information on an intra prediction mode) or inter prediction information (in the case of the merge mode, a merge index and in the case of the AMVP mode, information on the reference picture index and the motion vector difference) according to the prediction type. Further, the entropy encoder 155 encodes information related to quantization, i.e., information on the quantization parameter and information on the quantization matrix.

The inverse quantizer 160 dequantizes the quantized transform coefficients output from the quantizer 145 to generate the transform coefficients. The inverse transformer 165 transforms the transform coefficients output from the inverse quantizer 160 into a spatial domain from a frequency domain to restore the residual block.

The adder 170 adds the restored residual block and the prediction block generated by the predictor 120 to restore the current block. Pixels in the restored current block are used as reference pixels when intra-predicting a next-order block.

The loop filter unit 180 performs filtering for the restored pixels in order to reduce blocking artifacts, ringing artifacts, blurring artifacts, etc., which occur due to block based prediction and transform/quantization. The loop filter unit 180 as an in-loop filter may include all or some of a deblocking filter 182, a sample adaptive offset (SAO) filter 184, and an adaptive loop filter (ALF) 186.

The deblocking filter 182 filters a boundary between the restored blocks in order to remove a blocking artifact, which occurs due to block unit encoding/decoding, and the SAO filter 184 and the ALF 186 perform additional filtering for a deblocked filtered video. The SAO filter 184 and the ALF 186 are filters used for compensating a difference between the restored pixel and an original pixel, which occurs due to lossy coding. The SAO filter 184 applies an offset as a CTU unit to enhance a subjective image quality and encoding efficiency. Contrary to this, the ALF 186 performs block unit filtering and compensates distortion by applying different filters by dividing a boundary of the corresponding block and a degree of a change amount. Information on filter coefficients to be used for the ALF may be encoded and signaled to the video decoding apparatus.

The restored block filtered through the deblocking filter 182, the SAO filter 184, and the ALF 186 is stored in the memory 190. When all blocks in one picture are restored, the restored picture may be used as a reference picture for inter predicting a block within a picture to be encoded afterwards.

FIG. 5 is a functional block diagram for a video decoding apparatus, which may implement the technologies of the present disclosure. Hereinafter, referring to FIG. 5, the video decoding apparatus and sub-components of the apparatus are described.

The video decoding apparatus may be configured to include an entropy decoder 510, a rearrangement unit 515, an inverse quantizer 520, an inverse transformer 530, a predictor 540, an adder 550, a loop filter unit 560, and a memory 570.

Similar to the video encoding apparatus of FIG. 1, each component of the video decoding apparatus may be implemented as hardware or software or implemented as a combination of hardware and software. Further, a function of each component may be implemented as the software, and a microprocessor may also be implemented to execute the function of the software corresponding to each component.

The entropy decoder 510 extracts information related to block splitting by decoding the bitstream generated by the video encoding apparatus to determine a current block to be decoded and extracts prediction information required for restoring the current block and information on the residual signals.

The entropy decoder 510 determines the size of the CTU by extracting information on the CTU size from a sequence parameter set (SPS) or a picture parameter set (PPS) and splits the picture into CTUs having the determined size. In addition, the CTU is determined as a highest layer of the tree structure, i.e., a root node, and split information for the CTU is extracted to split the CTU by using the tree structure.

For example, when the CTU is split by using the QTBTTT structure, a first flag (QT_split_flag) related to splitting of the QT is first extracted to split each node into four nodes of the lower layer. In addition, a second flag (MTT_split_flag), a split direction (vertical/horizontal), and/or a split type (binary/ternary) related to splitting of the MTT are extracted with respect to the node corresponding to the leaf node of the QT to split the corresponding leaf node into an MTT structure. As a result, each of the nodes below the leaf node of the QT is recursively split into the BT or TT structure.

As another example, when the CTU is split by using the QTBTTT structure, a CU split flag (split_cu_flag) indicating whether the CU is split is extracted. When the corresponding block is split, the first flag (QT_split_flag) may also be extracted. During a splitting process, with respect to each node, recursive MTT splitting of 0 times or more may occur after recursive QT splitting of 0 times or more. For example, with respect to the CTU, the MTT splitting may immediately occur or on the contrary, only QT splitting of multiple times may also occur.

As another example, when the CTU is split by using the QTBT structure, the first flag (QT_split_flag) related to the splitting of the QT is extracted to split each node into four nodes of the lower layer. In addition, a split flag (split_flag) indicating whether the node corresponding to the leaf node of the QT being further split into the BT, and split direction information are extracted.

Meanwhile, when the entropy decoder 510 determines a current block to be decoded by using the splitting of the tree structure, the entropy decoder 510 extracts information on a prediction type indicating whether the current block is intra predicted or inter predicted. When the prediction type information indicates the intra prediction, the entropy decoder 510 extracts a syntax element for intra prediction information (intra prediction mode) of the current block. When the prediction type information indicates the inter prediction, the entropy decoder 510 extracts information representing a syntax element for inter prediction information, i.e., a motion vector and a reference picture to which the motion vector refers.

Further, the entropy decoder 510 extracts quantization related information, and extracts information on the quantized transform coefficients of the current block as the information on the residual signals.

The rearrangement unit 515 may change a sequence of 1D quantized transform coefficients entropy-decoded by the entropy decoder 510 to a 2D coefficient array (i.e., block) again in a reverse order to the coefficient scanning order performed by the video encoding apparatus.

The inverse quantizer 520 dequantizes the quantized transform coefficients and dequantizes the quantized transform coefficients by using the quantization parameter. The inverse quantizer 520 may also apply different quantization coefficients (scaling values) to the quantized transform coefficients arranged in 2D. The inverse quantizer 520 may perform dequantization by applying a matrix of the quantization coefficients (scaling values) from the video encoding apparatus to a 2D array of the quantized transform coefficients.

The inverse transformer 530 generates the residual block for the current block by restoring the residual signals by inversely transforming the dequantized transform coefficients into the spatial domain from the frequency domain.

Further, when the inverse transformer 530 inversely transforms a partial area (subblock) of the transform block, the inverse transformer 530 extracts a flag (cu_sbt_flag) that only the subblock of the transform block is transformed, directional (vertical/horizontal) information (cu_sbt_horizontal_flag) of the subblock, and/or positional information (cu_sbt_pos_flag) of the subblock. The inverse transformer 530 also inversely transforms the transform coefficients of the corresponding subblock into the spatial domain from the frequency domain to restore the residual signals and fills an area, which is not inversely transformed, with a value of "0" as the residual signals to generate a final residual block for the current block.

Further, when the MTS is applied, the inverse transformer 530 determines the transform index or the transform matrix to be applied in each of the horizontal and vertical directions by using the MTS information (mts_idx) signaled from the video encoding apparatus. The inverse transformer 530 also performs inverse transform for the transform coefficients in the transform block in the horizontal and vertical directions by using the determined transform function.

The predictor 540 may include the intra predictor 542 and the inter predictor 544. The intra predictor 542 is activated when the prediction type of the current block is the intra prediction, and the inter predictor 544 is activated when the prediction type of the current block is the inter prediction.

The intra predictor 542 determines the intra prediction mode of the current block among the plurality of intra prediction modes from the syntax element for the intra prediction mode extracted from the entropy decoder 510. The intra predictor 542 also predicts the current block by using neighboring reference pixels of the current block according to the intra prediction mode.

The inter predictor 544 determines the motion vector of the current block and the reference picture to which the motion vector refers by using the syntax element for the inter prediction mode extracted from the entropy decoder 510.

The adder 550 restores the current block by adding the residual block output from the inverse transformer 530 and the prediction block output from the inter predictor 544 or the intra predictor 542. Pixels within the restored current block are used as a reference pixel upon intra predicting a block to be decoded afterwards.

The loop filter unit 560 as an in-loop filter may include a deblocking filter 562, an SAO filter 564, and an ALF 566. The deblocking filter 562 performs deblocking filtering a boundary between the restored blocks in order to remove the blocking artifact, which occurs due to block unit decoding. The SAO filter 564 and the ALF 566 perform additional filtering for the restored block after the deblocking filtering in order to compensate a difference between the restored pixel and an original pixel, which occurs due to lossy coding. The filter coefficient of the ALF is determined by using information on a filter coefficient decoded from the bitstream.

The restored block filtered through the deblocking filter 562, the SAO filter 564, and the ALF 566 is stored in the memory 570. When all blocks in one picture are restored, the restored picture may be used as a reference picture for inter predicting a block within a picture to be encoded afterwards.

The present embodiment relates to encoding and decoding of an image (video) described above. More specifically, the present embodiment provides an intra prediction method and an apparatus that derive a reference block vector at each vertex of a current block and perform a geometric transform on the reference block vectors to generate reference blocks of various shapes that are not constrained to rectangular shapes. The intra prediction method and apparatus calculate a sub-block-vector for each pixel or each group of pixels of the current block using the reference block vectors.

In the following description, the term 'target block' may be used in the same meaning as the current block or coding unit (CU) described above or may mean a portion of the coding unit.

### I. Intra Block Copy (IBC)

IBC performs intra prediction of a current block by copying a reference block in the same frame using a block vector to generate a prediction block of the current block.

The video encoding apparatus derives an optimal block vector by performing block matching (BM) and then transmits the information on the derived block vector to the video decoding apparatus. Here, a block vector represents a displacement from a current block to a reference block. The video decoding apparatus performs intra prediction on the current block by generating a prediction block according to the information of a decoded block vector.

The use of a block vector provides the characteristics of inter prediction to the IBC. Therefore, like the merge/skip mode and AMVP mode of inter prediction, IBC may operate in the IBC merge/skip mode and IBC AMVP mode. The block vector information may include the information on these operation modes.

### II. Affine motion prediction in inter prediction

Inter prediction is motion prediction that reflects a translation motion model. In other words, inter prediction is a technique for predicting a motion in the horizontal direction (x-axis direction) and vertical direction (y-axis direction). However, in the real world, various types of motions such as rotation, zoom-in, or zoom-out may exist in addition to the translational motion. One aspect according to the present embodiment provides affine motion prediction that may reflect the various types of motion.

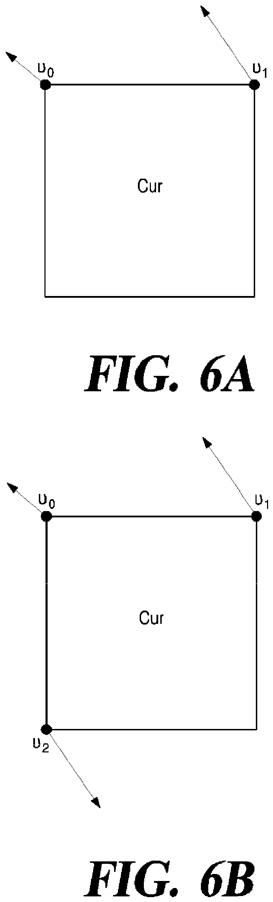

FIGS. 6A and 6B illustrate affine motion prediction according to one embodiment of the present disclosure.

Two types of models may be defined for affine motion prediction. As shown in FIG. 6A, one of the models uses two control point motion vectors (CPMVs) at the top-left and top-right corners of a target block to be encoded, which is a model using four parameters. As shown in FIG. 6B, the other one uses three CPMVs at the top-left, top-right, and bottom-left corners of the target block, which is a model using six parameters.

The four-parameter affine model is expressed by Equation 1. The motion at the sample position (x, y) within the target block may be calculated according to Equation 1. Here, the position of a sample at the top-left corner of the target block is assumed to be (0, 0).

**Equation 1**

$$\begin{cases} mv_x = \dfrac{mv_{1x} - mv_{0x}}{W} x - \dfrac{mv_{1y} - mv_{0y}}{W} y + mv_{0x} \\ mv_y = \dfrac{mv_{1y} - mv_{0y}}{W} x + \dfrac{mv_{1x} - mv_{0x}}{W} y + mv_{0y} \end{cases}$$

Also, the six-parameter affine model is expressed by Equation 2. The motion at the sample position (x, y) within the target block may be calculated according to Equation 2.

**Equation 2**

$$\begin{cases} mv_x = \dfrac{mv_{1x} - mv_{0x}}{W} x + \dfrac{mv_{2x} - mv_{0x}}{H} y + mv_{0x} \\ mv_y = \dfrac{mv_{1y} - mv_{0y}}{W} x + \dfrac{mv_{2y} - mv_{0y}}{H} y + mv_{0y} \end{cases}$$

In Equation 2, $(mv_{0x}, mv_{0y})$ represents the motion vector at the top-left corner control point, $(mv_{1x}, mv_{1y})$ represents the motion vector at the top-right cornet control point, and $(mv_{2x}, mv_{2y})$ represents the motion vector at the bottom-left cornet control point. W represents the horizontal length of a target block, and H represents the vertical length of the target block

Affine motion prediction may be performed by using a motion vector calculated according to Equation 1 or Equation 2 for each sample within the target block.

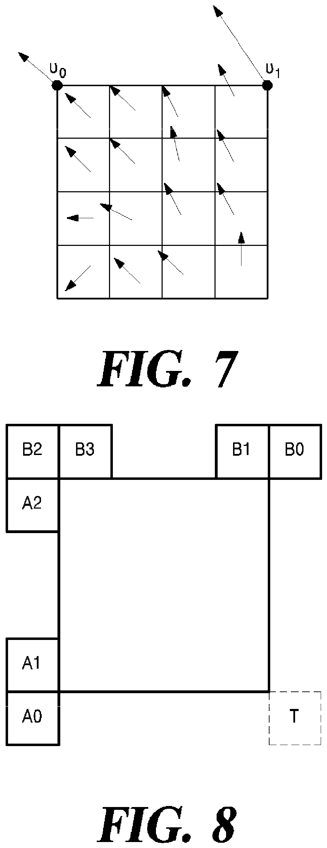

Alternatively, to reduce the computational complexity, as shown in FIG. 7, affine motion prediction may be performed on a per subblock split from the target block. For example, the size of a subblock may be 4×4, 2×2, or 8×8. The following descriptions are given based on the assumption that affine motion prediction is performed per 4×4 subblock basis for a target block. The assumption is introduced only for the convenience of description and thus the assumption does not limit the technical scope of the present disclosure.

In affine motion prediction per subblock basis, a motion vector (affine motion vector) of each subblock is calculated by substituting the center position of each subblock into (x, y) of Equation 1 or 2. Here, the center position may be the actual center point of the subblock or the bottom right sample position of the center point. For example, in the case of a 4×4 subblock of which the coordinates of the lower left sample are (0, 0), the center position of the subblock may be (1.5, 1.5) or (2, 2). A prediction block for each subblock is generated using an affine motion vector $(mv_x, mv_y)$ of the corresponding subblock.

The motion vector $(mv_x, mv_y)$ may be set to have 1/16 sample precision. In this case, the motion vector $(mv_x, mv_y)$ calculated according to Equation 1 or 2 may be rounded in units of 1/16 sample.

Affine motion prediction may be performed not only for a luma component but also for a chroma component. In the case of the 4:2:0 video format, if affine motion prediction is performed per 4×4 subblock basis for luma components, affine motion prediction for chroma components may be performed per 2×2 subblock basis. A motion vector $(mv_x, mv_y)$ of each subblock of the chroma component may be derived from a motion vector of the corresponding luma component. Alternatively, the size of a subblock for affine motion prediction of the chroma component may be the same as that of the luma component. If affine motion prediction is performed on the luma component per 4×4 subblock basis, affine motion prediction is also performed on the chroma component per 4×4 subblock basis. In this case, since a 4×4 subblock for the chroma component corresponds to four 4×4 subblocks for the luma component, a motion vector $(mv_x, mv_y)$ for a subblock of the chroma component may be obtained by calculating the average of motion vectors of four subblocks of the corresponding luma component.

The video encoding apparatus selects an optimal prediction method by performing intra prediction, inter prediction (translational motion prediction), and affine motion prediction and calculating a rate-distortion cost. To perform affine motion prediction, the inter predictor 124 of the video encoding apparatus determines which of the two types of models to use and determines two or three control points according to the determined type. The inter predictor 124 calculates a motion vector $(mv_x, mv_y)$ for each of the 4x4 subblocks in the target block using the motion vectors of the control points. Then, the inter predictor 124 generates a prediction block for each subblock in the target block by performing motion compensation within the reference picture per subblock basis using the motion vector ($mv_x$, $mv_y$) of each subblock.

The entropy encoder 155 of the video encoding apparatus encodes syntax elements related to affine motion prediction, which includes a flag indicating whether affine motion prediction is applied to the target block, includes type information indicating the type of the affine model, and includes motion information indicating the motion vector of each control point. The entropy encoder 155 delivers the encoded syntax elements to the video decoding apparatus. Type information and motion information of control points may be signaled when affine motion prediction is performed. Only the motion vectors of control points of which the number has been determined according to the type information may be signaled.

The video decoding apparatus determines the type of the affine model and control point motion vectors (CPMVs) using the signaled syntax elements and uses Equation 1 or 2 to calculate the motion vector ($mv_x$, $mv_y$) for each 4×4 subblock in the target block. If the motion vector resolution information for the affine motion vector of the target block is signaled, the motion vector ($mv_x$, $mv_y$) is corrected to a precision identified by the motion vector resolution information using an operation such as rounding.

The video decoding apparatus generates a prediction block for each subblock by performing motion compensation within a reference picture using a motion vector ($mv_x$, $mv_y$) for each subblock.

The conventional inter prediction (translational motion prediction) method described above may be applied to reduce the number of bits required to encode motion vectors of control points.

In one example, in the case of merge mode, the inter predictor 124 of the video encoding apparatus constructs an affine merge candidate list composed of a predefined number (e.g., 5) of affine merge candidates. First, the inter predictor 124 of the video encoding apparatus derives inherited affine merge candidates from neighboring blocks of a target block. For example, a merge candidate list is generated by deriving a predefined number of inherited affine merge candidates from neighboring samples (A0, A1, B0, B1, B2) of the target block shown in FIG. 4. Each of the inherited affine merge candidates included in the candidate list corresponds to a pair of two or three CPMVs.

The inter predictor 124 derives an inherited affine merge candidate from control point motion vectors of neighboring blocks predicted in the affine mode among neighboring blocks of the target block. In some embodiments, the number of merge candidates derived from neighboring blocks predicted in the affine mode may be limited. For example, the inter predictor 124 may derive a total of two inherited affine merge candidates, one from A0 and A1 and one from B0, B 1, and B2, from neighboring blocks predicted in the affine mode. The priority may be the order of A0 and A1, and the order of B0, B 1, and B2.

On the other hand, when the total number of merge candidates is three or more, the inter predictor 124 may derive as many constructed affine merge candidates as needed from translational motion vectors of neighboring blocks.

FIG. 8 illustrates a method for deriving merge candidates for affine motion prediction from translational motion vectors of neighboring blocks.

The inter predictor 124 derives control point motion vectors CPMV1, CPMV2, and CPMV3 from the neighboring block group {B2, B3, A2}, the neighboring block group {B1, B0}, and the neighboring block group {A1, A0}, respectively. In one example, the priority in each neighboring block group may be the order of B2, B3, and A2, the order of B 1 and B0, and the order of A1 and A0. Also, another control point motion vector CPMV4 is derived from a collocated block T in the reference picture. The inter predictor 124 combines two or three control point motion vectors among the four control point motion vectors to generate as many constructed affine merge candidates as needed. The priority order of combinations is as follows. The elements in each group are arranged in the order of top-left corner, top-right corner, and bottom-left corner control point motion vectors.

The order may be {CPMV1, CPMV2, CPMV3}, {CPMV1, CPMV2, CPMV4}, {CPMV1, CPMV3, CPMV4}, {CPMV2, CPMV3, CPMV4}, {CPMV1, CPMV2}, {CPMV1, CPMV3 }

When the merge candidate list may not be filled using the inherited affine merge candidates and the constructed affine merge candidates, the inter predictor 124 may add zero motion vectors as candidates.

The inter predictor 124 selects a merge candidate from the merge candidate list and performs affine motion prediction on the target block. When the selected candidate consists of two control point motion vectors, affine motion prediction is performed using the four-parameter model. On the other hand, when the selected candidate consists of three control point motion vectors, affine motion prediction is performed using the six-parameter model. The entropy encoder 155 of the video encoding apparatus encodes index information indicating a merge candidate selected among merge candidates in the merge candidate list and signals the encoded index information to the video decoding apparatus.

The entropy decoder 510 of the video decoding apparatus decodes index information signaled from the video encoding apparatus. The inter predictor 544 of the video decoding apparatus constructs a merge candidate list in the same manner as the video encoding apparatus and performs affine motion prediction using control point motion vectors corresponding to merge candidates indicated by the index information.

In another example, in the case of the AMVP mode, the inter predictor 124 of the video encoding apparatus determines the type of affine model and control point motion vectors for the target block. Then, the inter predictor 124 calculates a motion vector difference, which is a difference between actual control point motion vectors of the target block and predicted motion vectors of each control point, encodes the difference motion vector for each control point, and transmits the encoded difference motion vector. To this end, the inter predictor 124 of the video encoding apparatus constructs an affine AMVP candidate list composed of a predefined number (e.g., two) of affine AMVP candidates. When the target block is a four-parameter type, each candidate included in the list consists of a pair of two control point motion vectors. On the other hand, when the target block is a six-parameter type, each candidate included in the list consists of a pair of three control point motion vectors.

## III. Combination of IBC and geometric transform

The following embodiment may be performed by the intra predictor 122 of the video encoding apparatus and the intra predictor 542 of the video decoding apparatus.

In the following description, geometric transform and affine transform are used interchangeably.

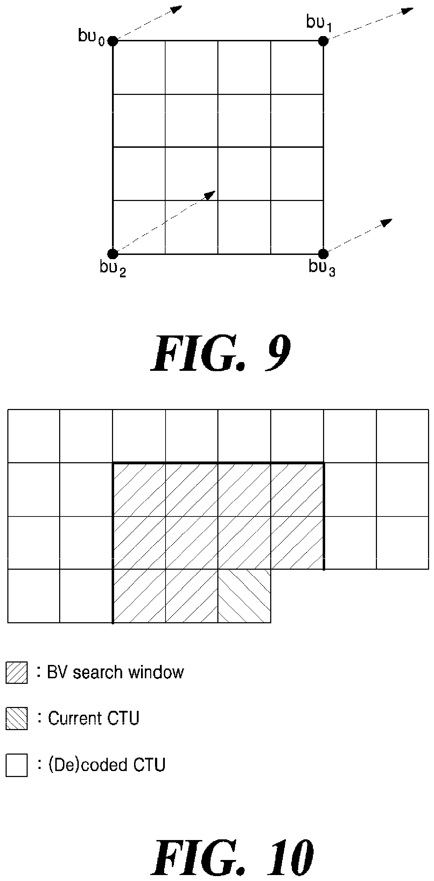

The video encoding apparatus according to the present embodiment calculates a reference block vector at each vertex of the current block, as illustrated in FIG. 9, in terms of rate-distortion optimization. The intra predictor 122 in the video encoding apparatus applies a geometric transform to one or more block vectors among the calculated reference block vectors to calculate sub-block-vectors for each pixel or each group of pixels (e.g., 4x4) of the current block. The intra predictor 122 may use the pixel values at the reference positions within the same frame, indicated by the sub-block-vectors, as prediction samples of the current block or may use the pixel values as prediction samples after filtering the pixel values at the reference positions. The video encoding apparatus encodes the information of the reference block vectors and transmits the encoded information to the video decoding apparatus.

In the following description, a bundle of pixels may be used interchangeably with a subblock or a pixel block.

Meanwhile, the video decoding apparatus decodes the information of the reference block vector. The intra predictor 542 in the video decoding apparatus derives a reference block vector at each vertex position of the current block using the information on the reference block vector. The intra predictor 542 calculates a sub-block-vector for each pixel or each pixel block of the current block by applying a geometric transform to one or more block vectors among the derived reference block vectors. The intra predictor 542 may use the pixel values at the reference positions in the same frame, indicated by the sub-block-vectors, as prediction samples of the current block or may use the pixel values as prediction samples after filtering the pixel values at the reference positions.

In the following description, a method for calculating a reference block vector by the video encoding apparatus is described.

The video encoding apparatus may calculate a maximum of four reference block vectors at the vertex positions of a current block.

To calculate reference block vectors, the video encoding apparatus may set a block vector search area to find the position of a reference block most similar to the current block. As another embodiment, the video encoding apparatus may calculate reference block vectors using block vector information of blocks encoded/decoded before the current block.

First, when a block vector search is used to calculate reference block vectors of the current block, the video encoding apparatus may use all blocks encoded/decoded blocks before the current block as a search area. Alternatively, the video encoding apparatus may set, as the search area, only the area including a CTU (in the following description, current CTU) including the current block and N (where N is a natural number) neighboring CTUs. For example, FIG. 10 shows a case where N is set to 10.

Regarding the block vector search, the video encoding apparatus may encode the search area information, including the size and the start position of the search area and then transmit the encoded search area information to the video decoding apparatus. As described above, to limit the search area to the current CTU and N CTUs adjacent to the current CTU, the video encoding apparatus may encode the value of N. For example, if 4 is encoded in the SPS to limit the search area to the current CTU and four neighboring CTUs, the search area may be limited from one CTU to a maximum of five CTUs according to the location of the current block.

After setting or deriving a search area, the video encoding apparatus performs motion estimation (ME) to calculate reference block vectors of a current block. The video encoding apparatus may perform ME on the search area by selecting one of several search methods, such as a full search, a 3-step search, and a diamond search. Here, a predetermined method may be used as a search method according to a prior agreement between the video encoding and decoding apparatuses. Also, additional information on a search method may be encoded/decoded per slice, picture, or CTU basis.

Meanwhile, the video decoding apparatus may decode search information including search area information and a search method and then calculate a reference block vector of the current block based on the decoded search information.

Next, when the information of a previously used block vector is used to calculate the reference block vectors of the current block, the video encoding apparatus may use a map or a list storing block vectors used in the previously encoded/decoded blocks.

When a map is used, the video encoding apparatus may derive block vectors based on the current block and then use the derived block vectors as reference block vectors by using one or more block vectors existing in a specific area in a map in which block vectors are stored. The video encoding apparatus may derive block vectors based on the current block by using all or part of block vectors existing in a specific area or by generating a combination of the block vectors.

On the other hand, the specific area is an area including a current CTU and N neighboring CTUs, an area including a CTU including pixels indicated by a previously used block vector and N neighboring CTUs, and an area that may be derived using information such as the shape and position of the current block or a prediction mode of neighboring blocks. Here, the value of N may be agreed in advance between the video encoding and decoding apparatuses. Alternatively, the value of N may be encoded by the video encoding apparatus and then transmitted to the video decoding apparatus.

When a list storing block vectors is used, the video encoding apparatus may encode index information of block vectors selected from the list and transmit the encoded index information to the video decoding apparatus. The video decoding apparatus may use block vectors in the list designated by the index as reference block vectors.

Also, the video encoding apparatus may update the list using the information on reference block vectors used in the current block. For example, the video encoding apparatus may transmit the size of the list on the SPS while managing block vectors used in each block based on the list. To update the list, if the current block uses block vectors, the video encoding apparatus checks whether corresponding reference block vectors are included in the list. When all or part of the corresponding reference block vectors are not included in the list, the video encoding apparatus may remove block vectors occurred first temporally from the list and then add block vectors used in the current block to the list. On the other hand, when corresponding reference block vectors are included in the list, the video encoding apparatus may change the order of the block vectors included in the list.

As described above, the process of using a map or a list may be performed in the same way in the video decoding apparatus.

On the other hand, the information of the reference block vector as described above is search information when a block vector search is used, while the information of the reference block vector is information of a map or a list in which block vectors are stored when information on the previously used block vector is used. Also, the search information may include search area information and a search method.

Meanwhile, the video encoding apparatus may encode an affine prediction flag, which is a flag indicating whether the affine transform is applied to the ISP, and then transmit the encoded affine prediction flag to the video decoding apparatus. Also, the video encoding apparatus may encode the encoding mode of a block vector and transmit the encoded block vector to the video decoding apparatus. Here, the encoding mode may represent a method of using a search area or a method of using the information of a previously used block vector.

Meanwhile, in the information stored in a map or a list, the position of a pixel indicated by a block vector may be expressed with reference to a current picture. Alternatively, the position of a pixel may be expressed one after another in the order of a slice index, a CTU index, a CU index, and the position in a CU. For example, a block vector may be stored in a map or a list to indicate the position of a pixel relative to the top left pixel of a current picture. Alternatively, to indicate the position of a pixel relative to the top left pixel of the o-th CU in the m-th CTU at the n-th slice, the values of n, m, and o may be stored together with a block vector based on the corresponding CU.

As another embodiment, when information on a previously used block vector is used to calculate the reference block vector of the current block, the video encoding apparatus may select all or part of the block vectors stored in the map or list and use one of the combinations of selected block vectors as reference block vectors. Here, a selection criterion may be the size or position of the block vector. For example, the video encoding apparatus may transmit an SPS including a value k (where k is a positive number) to prevent a block vector corresponding to a pixel located farther away from the current block than the value k from being used.

In the following description, a case in which ten block vectors are stored in a map or a list is described. The video encoding apparatus searches for available block vectors based on a current block. The video encoding apparatus may exclude those block vectors having a size greater than k or existing outside the search area from among ten block vectors and generate a combination using the remaining block vectors. For example, it is assumed that the number of available block vectors among block vectors stored in the map or list is two. In this case, the video encoding apparatus may generate two combinations when one reference block vector is used and generate four combinations when two reference block vectors are used. Since it is not allowed to support the case of using three and four reference block vectors, a total of six combinations may be generated.

The video decoding apparatus may use a combination of block vectors in the same way. Also, the video encoding apparatus may form a list of combinations of available block vectors, encode an index of the list, and transmit the encoded index to the video decoding apparatus.

Meanwhile, the method of calculating reference block vectors may be constrained according to the position and shape of the current block, the prediction mode of neighboring blocks, or higher-level syntax. For example, the video encoding apparatus may determine which geometric transform to use according to the maximum number of reference block vectors in the SPS and the number of reference block vectors actually used. Information corresponding to the maximum number of reference block vectors, the number of reference block vectors actually used, and geometric transform may be encoded/decoded into one or more sets per picture or slice basis. Here, information on the geometric transform parameters may also be encoded/decoded. For example, the video encoding apparatus may constrain geometric transform so that when the number of reference block vectors in the current picture is up to three, and one reference block vector is used, translational transform is applied. When two reference block vectors are used, flip transform is applied. When three reference block vectors are used, rotation and scaling transform is applied. In other words, according to the constraints, reference blocks may be generated in four fixed shapes. Also, the video encoding apparatus may control the degree of flip, rotation, and scaling by transmitting information on the parameters of each transformation.

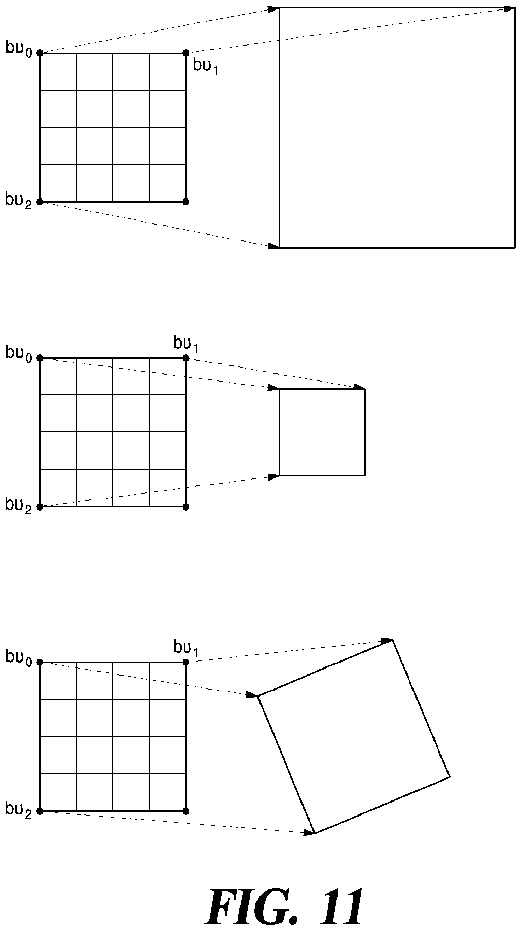

For example, as shown in the example of FIG. 11, it is assumed that three reference block vectors are used, and two pieces of transform information are encoded/decoded to make the shape of a reference block rotated and scaled. In this case, the scaling ratio or the degree of rotation may be constrained by additionally transmitting information on the transform parameters. If scaling transform is applied, and the parameter value is set to 2, the scaling ratio may be set so that only scaling by multiples of 2 is possible, such as $(1/8)\times$, $(1/4)\times$, $(1/2)\times$, $2\times$, $4\times$, and $8\times$.

If rotation transform is applied, the rotation angle may be constrained so that only rotation in units of 45 or 30 degrees is allowed by encoding/decoding the parameter value of rotation transform. For example, only rotation transform may be applied when three reference block vectors are used in the SPS. Also, when the rotation angle parameter is constrained to generate only the reference blocks of which the shape is determined by rotation in units of 90 degrees, the video decoding apparatus decodes information on how many reference block vectors the current block use. It is assumed that the current block uses three reference block vectors. In this case, the video decoding apparatus decodes the value of one reference block vector to determine the start position of the reference block and decodes the information about which rotation transform among 0, 90, 180, and 270 degrees is applied.

Information may include the positions and number of vertices for calculating a reference block vector, the size of a search area, the size of a block vector list to look up, and the size of a block vector to look up. The above information and size of a block vector calculated based on the information may be derived or constrained according to the high-level syntax, the shape and position of a current block, and the prediction mode of neighboring blocks.

For example, vertices for determining a reference block vector through the SPS may be constrained to be two vertices in the top part of the block.

Alternatively, the positions of vertices for calculating a reference block vector may be constrained according to the ratio of the width and height of a current block, namely, the aspect ratio. In one embodiment, when the width is twice as large as the height, the reference block vector may be calculated from two vertices in the top or bottom part of the block.

In one embodiment, when no IBC mode exists among prediction modes of neighboring blocks of the current block, the block vector is calculated only at the top left vertex. Also, the maximum number of reference block vectors may be derived according to the number of IBC modes among prediction modes of neighboring blocks of the current block. For example, if the number of IBC modes is zero, one reference block vector may be derived. If the number of IBC modes is two, a maximum of two reference block vectors may be derived.

Meanwhile, when a search area is employed, information on reference block vectors used in the current block may be encoded/decoded. Information on reference block vectors may include the number, direction, and size of the reference block vectors. The reference block vectors may be encoded/decoded in the order of top left, top right, bottom left, and bottom right, or information on the order of encoding/decoding may be encoded/decoded.

When the number of reference block vectors of the current block is two or more, and the information on the reference block vectors is encoded/decoded, the information on the reference block vector previously encoded/decoded may be used to predict the information on the reference block vectors to be encoded/decoded later. For example, when reference block vectors at the two top vertices of the current block are used, a reference block vector at the top right position may be predicted using the information on the reference block vector at the top left position. Here, as the top right reference block vector, BV Difference (BVD) for the top left reference block vector may be transmitted.

In the following description, a process of calculating a sub-block-vector and a process of generating prediction samples is described from the viewpoint of the video encoding apparatus. However, it should be noted that the video decoding apparatus may perform the same process.

The video encoding apparatus may calculate a sub-block-vector for each pixel or each group of pixels (e.g., $4\times4$) of the current block by combining one or more reference block vectors with respect to the calculated reference block vectors. For example, when the number of reference block vectors in use is 2, 3, and 4, a sub-block-vector may be calculated according to Equations 3, 4, and 5, respectively.

**Equation 3**

$$\begin{cases} bv_x = \dfrac{bv_{1x} - bv_{0x}}{W} x - \dfrac{bv_{1y} - bv_{0y}}{W} y + bv_{0x} \\ bv_y = \dfrac{bv_{1y} - bv_{0y}}{W} x + \dfrac{bv_{1x} - bv_{0x}}{W} y + bv_{0y} \end{cases}$$

**Equation 4**

$$\begin{cases} bv_x = \dfrac{bv_{1x} - bv_{0x}}{W} x + \dfrac{bv_{2x} - bv_{0x}}{W} y + bv_{0x} \\ bv_y = \dfrac{bv_{1y} - bv_{0y}}{W} x + \dfrac{bv_{2y} - bv_{0y}}{W} y + bv_{0y} \end{cases}$$

**Equation 5**

$$\begin{cases} bv_x = \dfrac{bv_{1x} - bv_{0x}}{W} x + \dfrac{bv_{2x} - bv_{0x}}{H} y + \dfrac{bv_{3x} - bv_{2x} - bv_{1x} + bv_{0x}}{W \cdot H} + bv_{0x} \\ bv_y = \dfrac{bv_{1y} - bv_{0y}}{W} x + \dfrac{bv_{2y} - bv_{0y}}{H} y + \dfrac{bv_{3y} - bv_{2y} - bv_{1y} + bv_{0y}}{W \cdot H} + bv_{0y} \end{cases}$$

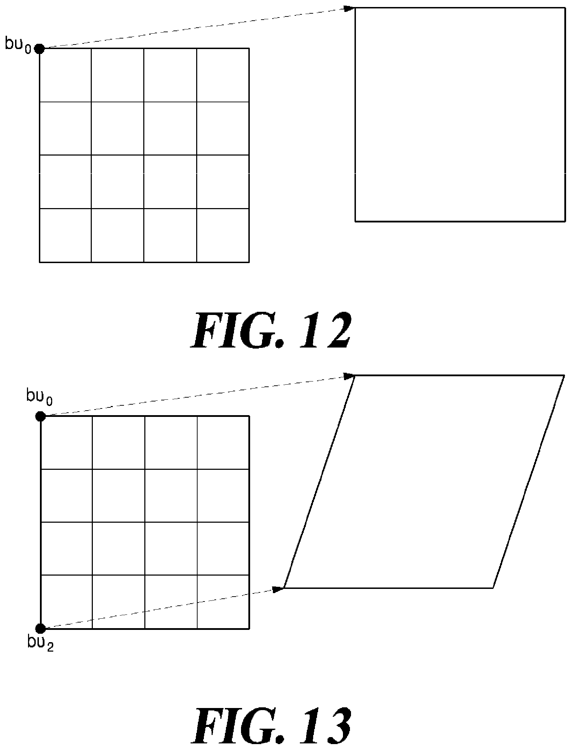

Meanwhile, as shown in FIG. 12, when one reference block vector is used in the current block, the video encoding apparatus may set the sub-block-vector to be the same as the reference block vector.

As shown in the example of FIG. 13, when two or more reference block vectors are used in the current block, the video encoding apparatus may calculate sub-block-vectors after deriving block vectors at the remaining vertices according to the position of the reference block vector (i.e., the vertex position).

In calculating sub-block-vectors for each pixel or each group of pixels of the current block, the video encoding apparatus may use a different block vector rather than the sub-block-vectors calculated as described above for a partial area (part of pixels or groups of pixels) of the current block. For example, it is assumed that the current block is split into 4×4 pixel blocks, and a sub-block-vector is calculated for each 4×4 subblock. In this case, for some subblocks, the video encoding apparatus may use the average of one or two or more reference block vectors among reference block vectors without using the sub-block-vectors calculated previously.

For each pixel or each pixel block of a current block, the video encoding apparatus may use a pixel value at the position of a sub-block-vector as a prediction sample or filter pixel values at the positions of sub-block-vectors to use the filtered pixel values as prediction samples.

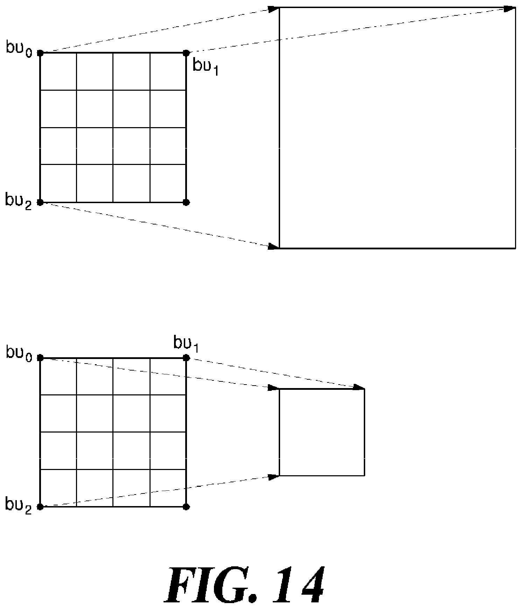

For example, as shown in FIG. 14, when a current block and a reference block have a scaling relationship, namely, when the size of the reference block is larger than or smaller than that of the current block, the video encoding apparatus may calculate prediction samples using a method described below.

When the reference block is larger than the current block, the video encoding apparatus may calculate, for each pixel block, prediction samples having a size larger than that of the pixel block (proportional to the ratio of the current block to the reference block or the ratio of the current block to the pixel block). The apparatus may also apply a filter to the calculated prediction samples and calculate final prediction samples by performing sampling the filtered prediction samples. Here, the filter may be one of the filters such as the Gaussian filter and the average filter, and the filter type and information on the selected filter may be encoded/decoded.

On the other hand, when the reference block is smaller than the current block, the video encoding apparatus may apply an L-tap (where L is a natural number) interpolation filter to prediction samples calculated for each pixel block. The apparatus may also perform sampling the filtered prediction samples and use all or part of prediction samples generated from the sampling as final prediction samples. Here, values agreed in advance between the video encoding and decoding apparatuses may be used to set the number of taps of the interpolation filter and the value of each tap. Alternatively, the video encoding apparatus may encode filter information or encode an index indicating a filter from a list including a plurality of filters and then transmit the encoded information to the video decoding apparatus.

Depending on the embodiments, the name of syntax and transmitting level related to the present disclosure may be changed, or part of the syntax may be changed or omitted.

As described above, the video encoding apparatus may include activation information for the geometric transform block copy method, namely, an affine prediction mode, in the SPS. When the affine prediction mode is activated, the video encoding apparatus may transmit constraints or a range for the geometric transform block copy to the video decoding apparatus. The constraints may include information on the maximum number of reference block vectors and the geometric transform type and parameters according to the number of reference block vectors used. Afterward, when the geometric transform block copy method is used per block basis, the video encoding apparatus encodes information on how many reference block vectors are used in each block, encodes as many pieces of information as the number of reference block vectors, and transmits the encoded information to the video decoding apparatus.

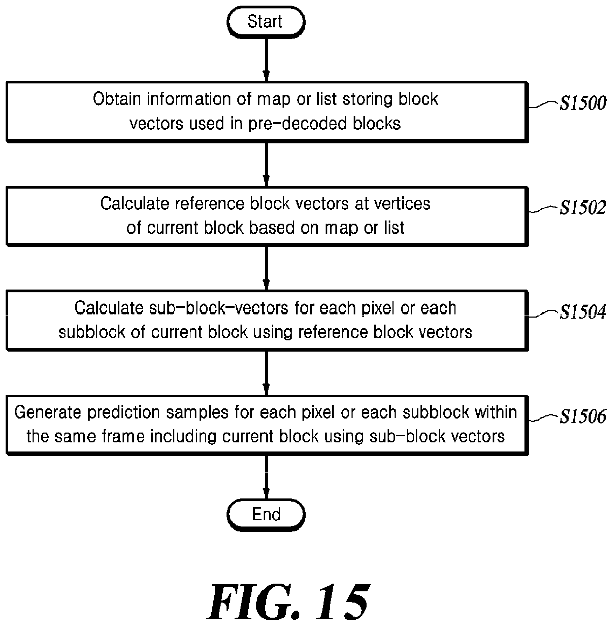

In the following description, with reference to FIG. 15, an intra block copy method based on a geometric transform, performed by the video encoding apparatus according to the present disclosure, is described.

FIG. 15 is a flow diagram illustrating an intra block copy method based on a geometric transform performed by a video encoding apparatus according to one embodiment of the present disclosure.

The video encoding apparatus according to the present embodiment calculates a reference block vector at each vertex of the current block in terms of rate-distortion optimization. The video encoding apparatus may encode the information of the reference block vectors and transmit the encoded information to the video decoding apparatus. Here, the information of the reference block vectors may be search information when a block vector search is used, while the information of the reference block vectors may be information of a map or a list in which block vectors are stored when information on the previously used block vector is used. The intra predictor 122 within the video encoding apparatus may perform intra block copy of the current block using the information on the reference block vectors as follows.

The intra predictor 122 within the video encoding apparatus obtains information of a map or a list storing block vectors used in the already decoded blocks (S 1500). The intra predictor 122 obtains the number of neighboring CTUs N of a current CTU including the current block as the information of the map from a high-level syntax element. Also, the intra predictor 122 obtains an index indicating a specific position within the list as the information of the list from a high-level syntax element.

In another embodiment, the intra predictor 122 may obtain search information from a high-level syntax element. Here, the search information may include search area information and a search method.

The intra predictor 122 calculates reference block vectors at the vertices of the current block based on the map or the list (S 1502).

When the map is used, the intra predictor 122 calculates block vectors based on the current block using one or more block vectors existing in a specific area of the map and uses the calculated block vectors as reference block vectors of the current block. Here, the specific area may be derived using an area including a current CTU including the current block and N neighboring CTUs, an area including a CTU including a pixel indicated by an already used block vector and N neighboring CTUs, the shape and position of the current block, or the prediction modes of neighboring blocks.

When the list is used, the intra predictor 122 may use block vectors in the list indicated by the index as reference block vectors of the current block. Also, the intra predictor 122 may update the list using reference block vectors. When updating the list, the intra predictor 122 may manage the size of the list. The size of the list may be obtained from a high-level syntax.

As another embodiment, when a block vector search is used, the intra predictor 122 may calculate reference block vectors of the current block by setting a search area using the search area information and performing ME using a preset search method. Since the setting of the search area and the type of search method have already been described, further detailed descriptions are omitted.

The intra predictor 122 calculates sub-block-vectors for each pixel or each subblock of the current block using reference block vectors (S 1504).

The intra predictor 122 may use preset equations as shown in Equations 3-5 to apply a geometric transform according to the number of reference block vectors.

The intra predictor 122 may use a different block vector rather than the sub-block-vectors for a partial area of the current block. Here, the different block vector may be one of the reference block vectors or a vector according to the average of two or more of the reference block vectors.

The intra predictor 122 generates prediction samples for each pixel or each subblock within the same frame including the current block using sub-block-vectors (S1506).

For each pixel or each subblock of a current block, the intra predictor 122 may use pixel values at the positions of sub-block-vectors as prediction samples or filter pixel values at the positions of sub-block-vectors to use the filtered pixel values as prediction samples.

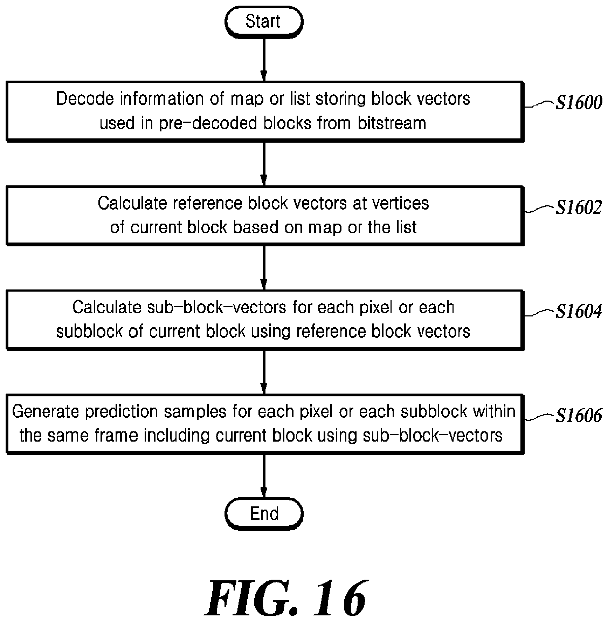

In the following description, with reference to FIG. 16, an intra block copy method based on a geometric transform, performed by the video decoding apparatus according to the present disclosure, is described.

FIG. 16 is a flow diagram illustrating an intra block copy method based on a geometric transform performed by a video decoding apparatus according to one embodiment of the present disclosure.

The video decoding apparatus according to the present embodiment decodes the information on the reference block vectors transmitted from the video encoding apparatus and calculates the reference block vector at the position of each vertex of the current block as follows.

The entropy decoder 510 in the video decoding apparatus decodes the information of a map or a list storing block vectors used in the pre-decoded blocks from a bitstream (S 1600). The entropy decoder 510 decodes the number N of neighboring CTUs of the current CTU including the current block as map information. Also, the entropy decoder 510 decodes an index indicating a specific position in the list as list information.

The intra predictor 542 in the video decoding apparatus calculates reference block vectors at vertices of the current block based on the map or list (S 1602).

When the map is used, the intra predictor 542 calculates block vectors based on the current block using one or more block vectors existing in a specific area of the map and uses the calculated block vectors as reference block vectors of the current block.

When the list is used, the intra predictor 542 may use block vectors in the list indicated by the index as reference block vectors of the current block. Also, the intra predictor 542 may update the list using reference block vectors. When updating the list, the intra predictor 542 may manage the size of the list.

As another embodiment, when a block vector search is used, the intra predictor 542 may calculate reference block vectors of the current block by setting a search area using the search area information and performing ME using a preset search method.

The intra predictor 542 calculates sub-block-vectors for each pixel or each subblock of the current block using reference block vectors (S 1604).

The intra predictor 542 may use preset equations as shown in Equations 3-5 to apply a geometric transform according to the number of reference block vectors.

The intra predictor 542 generates prediction samples for each pixel or each subblock within the same frame including the current block using sub-block-vectors (S1606).

For each pixel or each subblock of a current block, the intra predictor 542 may use pixel values at the positions of sub-block-vectors as prediction samples or filter pixel values at the positions of sub-block-vectors to use the filtered pixel values as prediction samples.

Although the steps in the respective flowcharts are described to be sequentially performed, the steps merely instantiate the technical idea of some embodiments of the present disclosure. Therefore, a person having ordinary skill in the pertinent art could perform the steps by changing the sequences described in the respective drawings or by performing two or more of the steps in parallel. Hence the steps in the respective flowcharts are not limited to the illustrated chronological sequences.

It should be understood that the above description presents illustrative embodiments that may be implemented in various other manners. The functions described in some embodiments may be realized by hardware, software, firmware, and/or their combination. It should also be understood that the functional components described in this specification are labeled by "... unit" to strongly emphasize the possibility of their independent realization.

Meanwhile, various methods or functions described in some embodiments may be implemented as instructions stored in a non-transitory recording medium that can be read and executed by one or more processors. The non-transitory recording medium includes, for example, all types of recording devices in which data is stored in a form readable by a computer system. For example, the non-transitory recording medium may include storage media such as erasable programmable read-only memory (EPROM), flash drive, optical drive, magnetic hard drive, and solid state drive (SSD) among others.

Although embodiments of the present disclosure have been described for illustrative purposes, those having ordinary skill in the art should appreciate that various modifications, additions, and substitutions are possible, without departing from the idea and scope of the present disclosure. Therefore, embodiments of the present disclosure have been described for the sake of brevity and clarity. The scope of the technical idea of the embodiments of the present disclosure is not limited by the illustrations. Accordingly, one of ordinary skill should understand that the scope of the present disclosure is not to be limited by the above explicitly described embodiments but by the claims and equivalents thereof.

[Reference Numerals]

122: intra predictor
510: entropy decoder
542: intra predictor

CROSS-REFERENCE TO RELATED APPLICATIONS

This application claims priority to Korean Patent Application No. 10-2020-0158994 filed on November 24, 2020, and Korean Patent Application No. 10-2021-0163126 filed on November 24, 2021, the entire disclosures of which are incorporated herein by reference.

**Claims**

1.  An intra block copy method performed by a video decoding apparatus, the method comprising:

    decoding information of a map or a list storing block vectors used in pre-decoded blocks from a bitstream;
    calculating reference block vectors at vertices of a current block based on the map or the list;
    calculating sub-block-vectors for each pixel or each subblock of the current block using the reference block vectors; and
    generating prediction samples for each pixel or each subblock within the same frame including the current block using the sub-block-vectors.

2.  The method of claim 1, wherein decoding comprises:

    decoding the number $N$ (where $N$ is a natural number) of neighboring coding tree units (CTUs) of a current CTU including the current block as map information; and
    decoding an index indicating a specific position in the list as list information.

3.  The method of claim 2, wherein, when the map is used, calculating the reference block vectors comprises deriving block vectors based on the current block using one or more block vectors existing in a specific area of the map and using the derived block vectors as the reference block vectors.

4.  The method of claim 3, wherein the specific area is derived using an area including a current CTU including the current block and $N$ neighboring CTUs, an area including a CTU including a pixel indicated by an already used block vector and $N$ neighboring CTUs, a shape and a position of the current block, or prediction modes of neighboring blocks.

5.  The method of claim 2, wherein, when the list is used, calculating the reference block vectors comprises using block vectors in the list indicated by the index as the reference block vectors.

6.  The method of claim 5, wherein

    calculating the reference block vectors comprises updating the list using the reference block vectors, and
    when all or part of the reference block vectors are not included in the list, block vectors occurred first temporally are removed from the list and part of the reference block vectors is added to the list.

7.  The method of claim 2, wherein

    calculating the reference block vectors comprises not using a block vector on the list, corresponding to a pixel located farther away from the current block than a preset distance, and
    the preset distance is transmitted by a high-level syntax element.

8.  The method of claim 7, wherein calculating the reference block vectors comprises selecting block vectors on the list lying within the preset distance and using one of combinations of the selected block vectors as the reference block vectors.

9.  The method of claim 2, wherein

    calculating the reference block vectors comprises limiting the type of geometric transform according to the maximum number of reference block vectors and the number of reference block vectors actually used by the current block, and
    the type of geometric transform and the corresponding parameters are transmitted by a high-level syntax element.

10. The method of claim 2, wherein calculating the reference block vectors comprises constraining the characteristics of flip, rotation, and scaling transform according to parameters corresponding to the type of geometric transform.

11. The method of claim 10, wherein calculating the reference block vectors comprises deriving the maximum number of the reference block vectors based on the number of prediction modes corresponding to block copy among prediction modes of neighboring blocks of the current block.

12. The method of claim 1, wherein calculating the sub-block-vectors comprises using preset different equations according to the number of reference block vectors to apply a geometric transform.

13. The method of claim 1, wherein

calculating the sub-block-vectors comprises using a different block vector rather than the sub-block-vectors for a partial area of the current block, and
the different block vector is one of the reference block vectors or a vector corresponding to the average of two or more of the reference block vectors.

14. The method of claim 1, wherein, for each pixel or each subblock of a current block, generating the prediction samples comprises using pixel values at the positions of the sub-block-vectors as the prediction samples or filtering the pixel values at the positions of sub-block-vectors to use the filtered pixel values as the prediction samples.

15. The method of claim 1, wherein, when the reference block according to the reference block vectors is larger than the current block, generating the prediction samples comprises:

calculating, for each subblock, prediction samples having a size larger than that of the subblock;
applying a filter to the calculated prediction samples; and
calculating final prediction samples by sampling the filtered prediction samples.

16. The method of claim 1, wherein, when the reference block according to the reference block vectors is smaller than the current block, generating the prediction samples comprises

applying an $L$-tap (where $L$ is a natural number) interpolation filter to prediction samples calculated for each subblock;
sampling the filtered prediction samples; and
using all or part of prediction samples generated from the sampling as final prediction samples.

17. A video decoding apparatus comprising:

an entropy decoder configured to decode information of a map or a list storing block vectors used in pre-decoded blocks from a bitstream; and
an intra predictor configured to calculate reference block vectors at vertices of a current block based on the map or the list and calculate sub-block-vectors for each pixel or each subblock of the current block using the reference block vectors,
wherein the intra predictor generates prediction samples for each pixel or each subblock within the same frame including the current block using the sub-block-vectors.

18. An intra block copy method performed by a video encoding apparatus, the method comprising:

obtaining information of a map or a list storing block vectors used in pre-decoded blocks;
calculating reference block vectors at vertices of a current block based on the map or the list;
calculating sub-block-vectors for each pixel or each subblock of the current block using the reference block vectors; and
generating prediction samples for each pixel or each subblock within the same frame including the current block using the sub-block-vectors.

**FIG. 1**

Current picture → Picture splitter (110)

110 Picture splitter
120 Inter-predictor (124) / Intra-predictor (122)
130 (+/−)
140 Transformer
145 Quantizer
150 Rearrangement unit
155 Entropy encoder → NAL
160 Inverse quantizer
165 Inverse transformer
170 (+)
180 Deblocking filter (182) / SAO (184) / ALF (186)
190 Memory

# FIG. 2

## FIG. 3A

# FIG. 3B

B2

B0 B1

A0

A1

# FIG. 4

Bitstream → Entropy decoder *510* → Rearrangement unit *515* → Inverse quantizer *520* → Inverse transformer *530* → + ⊕ *550* → Reconstructed video

*540* *544*
Inter-predictor
Intra-predictor
*542*

Memory *570* ← ALF *566* ← SAO *564* ← Deblocking filter *562*
*560*

# FIG. 5

**FIG. 6A**

**FIG. 6B**

# *FIG. 7*

# *FIG. 8*

# FIG. 9

▨ : BV search window

▨ : Current CTU

☐ : (De)coded CTU

# FIG. 10

**FIG. 11**

# FIG. 12

# FIG. 13

*FIG. 14*

Start

Obtain information of map or list storing block vectors used in pre-decoded blocks ⌐S1500

Calculate reference block vectors at vertices of current block based on map or list ⌐S1502

Calculate sub-block-vectors for each pixel or each subblock of current block using reference block vectors ⌐S1504

Generate prediction samples for each pixel or each subblock within the same frame including current block using sub-block vectors ⌐S1506

End

# FIG. 15

Start

Decode information of map or list storing block vectors
used in pre-decoded blocks from bitstream — *S1600*

Calculate reference block vectors at vertices
of current block based on map or the list — *S1602*

Calculate sub-block-vectors for each pixel or each
subblock of current block using reference block vectors — *S1604*

Generate prediction samples for each pixel or each subblock within
the same frame including current block using sub-block-vectors — *S1606*

End

# FIG. 16

## INTERNATIONAL SEARCH REPORT

| International application No. |
| --- |
| **PCT/KR2021/017383** |

| A. | CLASSIFICATION OF SUBJECT MATTER |
| --- | --- |

**H04N 19/593**(2014.01)i; **H04N 19/176**(2014.01)i; **H04N 19/119**(2014.01)i; **H04N 19/61**(2014.01)i

According to International Patent Classification (IPC) or to both national classification and IPC

| B. | FIELDS SEARCHED |
| --- | --- |

Minimum documentation searched (classification system followed by classification symbols)

H04N 19/593(2014.01); H04N 19/105(2014.01); H04N 19/11(2014.01); H04N 19/147(2014.01); H04N 19/149(2014.01); H04N 19/52(2014.01); H04N 19/56(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 복호화(decoding), 인트라 블록 복사(intra block copy), 서브블록(subblock), 인덱스(index), 블록벡터(block vector), CTU(coding tree unit)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CAO, Jian et al. CE8-related: An Intra-Affine mode for screen content coding. JVET-O0682_v2, Joint Video Experts Team (JVET) of ITU-T SG 16 WP 3 and ISO/IEC JTC 1/SC 29/WG 11. 15th Meeting: Gothenburg, SE. pp. 1-5, 06 July 2019. See pages 1-4; and figures 1-2. | 1-18 |
| Y | KR 10-2016-0135226 A (QUALCOMM INCORPORATED) 25 November 2016 (2016-11-25) See paragraphs [0008], [0023], [0044], [0058]-[0063] and [0112]; and claims 5-6. | 1-18 |
| Y | KR 10-2020-0055124 A (INTERDIGITAL VC HOLDINGS, INC) 20 May 2020 (2020-05-20) See paragraphs [0082]-[0083], [0090]-[0091] and [0140]. | 12-13 |
| A | WO 2020-108572 A1 (BEIJING BYTEDANCE NETWORK TECHNOLOGY CO., LTD. et al.) 04 June 2020 (2020-06-04) See claims 1-13; and figure 16. | 1-18 |
| A | US 2019-0246110 A1 (TENCENT AMERICA LLC) 08 August 2019 (2019-08-08) See paragraphs [0106]-[0109]; and figure 9. | 1-18 |

☐ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 February 2022** | **25 February 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

# EP 4 250 735 A1

| INTERNATIONAL SEARCH REPORT | | | International application No. |
|---|---|---|---|
| Information on patent family members | | | **PCT/KR2021/017383** |

| Patent document cited in search report | | | Publication date (day/month/year) | Patent family member(s) | | | Publication date (day/month/year) |
|---|---|---|---|---|---|---|---|
| KR | 10-2016-0135226 | A | 25 November 2016 | CN | 106134196 | A | 16 November 2016 |
| | | | | EP | 3120558 | A1 | 25 January 2017 |
| | | | | JP | 2017-513361 | A | 25 May 2017 |
| | | | | US | 10477232 | B2 | 12 November 2019 |
| | | | | US | 2015-0271517 | A1 | 24 September 2015 |
| | | | | WO | 2015-143346 | A1 | 24 September 2015 |
| KR | 10-2020-0055124 | A | 20 May 2020 | CN | 111418209 | A | 14 July 2020 |
| | | | | EP | 3468196 | A1 | 10 April 2019 |
| | | | | EP | 3692719 | A1 | 12 August 2020 |
| | | | | US | 2020-0288166 | A1 | 10 September 2020 |
| | | | | WO | 2019-070944 | A1 | 11 April 2019 |
| WO | 2020-108572 | A1 | 04 June 2020 | CN | 113170193 | A | 23 July 2021 |
| | | | | US | 2021-0021811 | A1 | 21 January 2021 |
| | | | | WO | 2020-108571 | A1 | 04 June 2020 |
| | | | | WO | 2020-108574 | A1 | 04 June 2020 |
| US | 2019-0246110 | A1 | 08 August 2019 | CN | 111492661 | A | 04 August 2020 |
| | | | | EP | 3750314 | A1 | 16 December 2020 |
| | | | | US | 11202079 | B2 | 14 December 2021 |
| | | | | US | 2022-0014757 | A1 | 13 January 2022 |
| | | | | WO | 2019-150352 | A1 | 08 August 2019 |

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020200158994

- KR 1020210163126